# DEMANDE DE BREVET EUROPEEN

(11) **EP 1 600 271 A1**
(43) Date de publication de la demande: **30.11.2005**
(21) Numéro de dépôt: 04011159.3
(22) Date de dépôt: 11.05.2004
(51) Int. Cl.: B29C 43/34, B29C 31/04, B29C 31/06, B29C 43/08, B29C 43/52, B29C 47/30

(54) **Procédé et dispositif de fabrication d'une préforme en matière plastique**

(71) Demandeur: Nestlé Waters Management & Technology, 92130 Issy-les-Moulineaux (FR)
(72) Inventeur: Denis, Gérard, 51100 Reims (FR); Didier, Eric, 88800 Remoncourt (FR)
(74) Mandataire: Thomas, Alain

(57) **Abrégé**

La présente invention concerne un procédé de fabrication d'une préforme à partir d'un polymère amorphe semi-cristallin à vitesse de cristallisation lente, dans lequel
- on plastifie en (3) ledit polymère par montée rapide en température, à une température inférieure à la température de fusion
- on presse à travers une filière (4) ledit polymère plastifié,
- on balaye à la sortie de la filière ledit polymère par un gaz neutre, sec et neutre (11)
- on recueille le polymère plastifié dans un premier récipient (6), tout en maintenant le polymère à la même température que celle de plastification dans toutes les étapes et
- on effectue un matriçage (13) dans ledit premier récipient ou dans un second récipient, transféré du premier, sous refroidissement brutal de manière à obtenir la préforme dans un état amorphe.

## Description

La présent invention concerne un procédé de fabrication de préformes en matière plastique ainsi que le dispositif pour la mise en oeuvre dudit procédé.

Les procédés actuels de fabrication de préformes sont basés sur l'utilisation de polymères cristallisés, qu'on extrude pour fondre au-delà de leur point de fusion et ensuite qu'on injecte dans un moule : c'est la méthode usuelle de fabrication des préformes en matière plastique. Il existe une seconde méthode connue de fabrication de préformes en matière plastique, dans laquelle on fond un polymère cristallisé dans une extrudeuse et ensuite on effectue un matriçage dudit polymère fondu, étape appelée aussi compression. Il existe déjà divers brevets basés sur cette approche, à savoir des brevets de Toyo Seikan Kaisha US 6'349'838, de Sacmi WO 01/66327 et de Emery L. Valyi US 5'762'854. Les inconvénients de cette seconde méthode est que l'on utilise un polymère cristallisé, ce qui signifie que l'on doit fournir une énergie élevée pour arriver à la fusion et qu'on utilise pour ladite fusion une extrudeuse classique.

Le but de la présente invention est de mettre au point un procédé de fabrication de préformes en matière plastique, dans lequel on économise de l'énergie, car au lieu de partir d'un polymère cristallisé, on part d'un polymère semi cristallin dans son état amorphe, ayant un point de plastification bien en dessous du point de fusion du même polymère dans son état cristallin. Outre le gain d'énergie permis par le procédé selon l'invention, celui-ci permet aussi de ménager le polymère utilisé, car il ne nécessite pas un fort taux de cisaillement. D'autre part, comme le polymère est dans l'état amorphe, il peut avoir une viscosité intrinsèque plus faible et il permettra donc en aval, lors de l'étape d'étirage-soufflage-moulage de faciliter ladite étape et de réaliser à nouveau des économies d'énergie.

La présente invention concerne un procédé de fabrication d'une préforme à partir d'un polymère amorphe semi-cristallin à l'état amorphe à vitesse de cristallisation lente, dans lequel
- on plastifie ledit polymère par montée rapide en température, à une température inférieure à la température de fusion,
- on presse à travers une filière ledit polymère plastifié,
- on balaye à la sortie de la filière ledit polymère par un gaz neutre, sec et chaud,
- on recueille le polymère plastifié dans un premier récipient, tout en maintenant le polymère à la même température que celle de plastification dans toutes les étapes et
- on effectue un matriçage dans ledit premier récipient ou dans un second récipient, transféré du premier, sous refroidissement brutal de manière à obtenir la préforme dans un état amorphe.

Par polymère semi-cristallin à vitesse de cristallisation lente à l'état amorphe, on entend un polymère thermoplastique semi-cristallin dont la température de cristallisation isothermique est comprise entre la température de transition vitreuse Tg et la température de fusion Tf, mais nettement inférieure à Tf. Par polymère semi-cristallin, on entend un polymère ayant un taux de cristallinité de l'ordre de 30 %. Les polymères utilisables selon la présente invention peuvent être tous polymères tombant dans cette catégorie. Comme examples possibles de polymères, on peut citer le Poly-Ethylène-Téréphthalate (PET), les Polyamides aromatiques (par exemple MXD6), le Poly-Ethylène-Naphthalate (PEN). De manière préférentielle,le procédé selon l'invention s'applique au PET.

La première étape du procédé consiste à élever la température du polymère semi-cristallin à l'état amorphe de manière rapide pour plastifier ledit polymère. Cette étape de plastification est mise en oeuvre à une température du polymère comprise entre sa température de fusion et la température représentant la borne supérieure de la zone de cristallisation. Cette température est généralement bien inférieure à la température de fusion du polymère. Dans le cas préférentiel du PET, cette température de plastification est comprise entre 220 et 230 °C. Alors que pour le polymère cristallisé, la température de fusion est de l'ordre de 250 °C et sa zone de travail est de 280 °C. De manière plus préférentielle, on plastifie le PET amorphe à une température de l'ordre de 225 °C.

Il est important dans le procédé selon l'invention de maintenir une température constante dans les étapes suivantes afin de ne pas provoquer une cristallisation isothermique ou une décomposition.

Il est également important de plastifier rapidement pour les mêmes raisons qu'explicitées précédemment. Par exemple, dans les cas du PET, la montée en température doit être faite en une durée de l'ordre de la minute . Il est bien entendu possible de dépasser la minute, mais en aucun cas dépasser les 5 minutes.

Lorsque le polymère est plastifié, la seconde étape consiste à presser ledit polymère à travers une filière. Cette filière n'est pas critique. De préférence, elle comporte une multitude d'ouvertures cylindriques de taille et de dimension adaptées au résultat voulu. Il ressort ainsi sous la filière des fils de polymère plastifié. La raison de ce pressage à travers la filière est de produire des fils fins, de manière à extraire avec un gaz neutre sec et chaud les produits volatils. Par produits volatils, on entend aussi bien l'eau que les aldéhydes (l'acétaldéhyde ou le formaldéhyde) et autres. Le gaz neutre utilisé selon la présente invention n'est pas critique. C'est par exemple de l'azote, du gaz carbonique et autres. De préférence, le gaz utilisé est de l'azote. Le gaz est normalement introduit sec et chaud sous faible pression. De préférence, on injecte le gaz à une pression minimale relative de l'ordre de 0,2 bar, à une température de 220 à 240 °C.

Le polymère plastifié est pressé à travers la filière avec une pression qui n'est pas critique. Cependant, il est inutile de prévoir des pressions trop élevées. on opère de préférence selon l'invention à une pression inférieure à 100 bar. De préférence, la pression mise en oeuvre est de l'ordre de 50 bar.
Après le balayage avec un gaz neutre du polymère plastifié, on recueille ledit polymère dans un récipient. Il y a dans ce cas, deux posibilités.

La première consiste à effectuer le matriçage dans le même récipient, en refroidissant ensuite de la température de plastification à une température de l'ordre de 50 °C en dessous de la température de transition vitreuse. Le matériau utilisé pour ledit récipient doit être de faible inertie thermique et le récipient lui-même doit avoir une faible épaisseur, de manière à permettre un refroidissement rapide. Le matériau du récipient est thermoconducteur. De préférence, le matériau est un alliage métallique,par exemple un alliage cuivre-béryllium.

La seconde solution consiste à transfèrer le polymère d'un premier récipient à un second récipient dans lequel on effectue le matriçage en refroidissant ensuite de la température de plastification à une température de l'ordre de 50 °C inférieure àla température de transition vitreuse. Le matériau utilisé dans ce cas pour le second récipient peut être différent que pour le récipient de la solution précédente. S'agissant du matériau du premier récipient, il s'agit dans ce cas d'un récipient métallique, par exemple en acier ou en aluminium.

Dans les deux cas,après le matriçage, on effectue le refroidissement très rapide du polymère plastifié en une durée de l'ordre de la minute, par exemple entre 30 et 180 secondes.

Il est bien entendu que le procédé selon l'invention permet aussi bien de fabriquer des préformes de quelques grammes que des préformes de quelques dizaines de grammes. Les conditions mentionnées ci-dessus restent valables aussi bien pour des petites que pour de plus grandes préformes.

La présente invention concerne également un dispositif pour la mise en oeuvre du procédé décrit ci-dessus, ledit dispositif comprenant :
- une chambre de plastification du polymère semi-cristallin dans son état amorphe,
- des moyens de chauffage et de régulation de ladite chambre, autour de celle-ci,
- des moyens d'alimentation en polymère de ladite chambre,
- une filière sous la chambre de plastification,
- des moyens au dessus de ladite chambre pour pousser le polymère plastifié à travers la filière
- une arrivée de gaz neutre sous la filière et un dispositif pour sécher et chauffer le gaz,
- un récipient pour recueillir le polymère plastifié,
- un disque tournant comportant une pluralité de récipients et
- un poinçon de matriçage pour former la préforme.

On peut envisager comme dispositif selon l'invention, un appareil permettant de produire entre 1000 et 10000 préformes à l'heure. La consommation du polymère est de l'ordre de 100 kg à plus de 1 tonne à l'heure.

Les moyens de chauffage et de régulation peuvent être électriques ou tout autre moyen connu dans l'état de la technique.

L'alimentation en granulés amorphes est assurée par un système traditionnel de trémie et couronne de répartition ou tout autre moyen d'alimentation. Les moyens pour pousser le polymère plastifié à travers la filière sont constitués par un vérin de poussée. Le disque comporte de manière générale de l'ordre de 10 à 100 récipients. Il tourne à une vitesse comprise entre 0,1 et 15 tours/min. Le poinçon de matriçage est actionné par un vérin de matriçage, dont la vitesse est adaptée à la vitesse de rotation du disque.

Comme déjà mentionné ci-dessus, on peut envisager deux solution également pour le dispositif. La première consiste à remplir directement le récipient dans lequel on procédera au matriçage et la seconde est de prévoir un premier récipient de transfert et ensuite un second récipient dans lequel on procédera au matriçage. Ces deux solutions seront mieux explicitées ci-dessous en référence aux dessins, sur lesquels
Fig. 1 est une représentation schématique du procédé selon l'invention dans le premier mode de réalisation et
Fig. 2A est une représentation schématique du dispositif selon l'invention dans un mode de réalisation industrielle et
Fig. 2B est une représentation schématique du dispositif selon l'invention dans un second mode de réalisation industrielle.

Dans ces modes de réalisation, on prendra comme exemple le PET. Les granulés de polymère dans un état amorphe arrivent par la conduite (12) dans la chambre de plastification (3). Le bloc d'alimentation (2) permet d'isoler la chambre de chauffage (3) de manière à plastifier le polymère au dernier moment. Le verin (1) permet de pousser le polymère à plastifier. La filière (4) comprend une multitude de petits orifices et débouche dans la chambre (5) d'extraction des produits volatils, ladite chambre comprenant une arrivée de gaz neutre (11). Le récipient (6) recueille le polymère plastifié et le disque tournant (8) améne le récipient sous le poinçon (13) du vérin de matriçage (7).

Le mode de fonctionnement du dispositif est le suivant . Les granulés de PET amorphe arrivent par la conduite (12) et il sont chauffés à 220 °C dans la chambre (3) grâce à la régulation de cette chambre. Ce qu'il faut , c'est que la couche proche de la filière (4) soit bien plastifié alors que la couche au dessus commence seulement à plastifier. Le vérin (1) est actionné en descente et déplace le polymère plastifié à travers la filière (4), de manière à créer une multitude de fils. L'azote (11) arrive sur ces fils et emporte ou extrait les composés volatils. Le polymère plastifié tombe dans le récipient (6) et le vérin (1) remonte pour remplir la chambre et le récipient suivant. Le récipient (9) rempli précédemment se trouve au moment du remplissage du récipient (6) sous le vérin de matriçage et le poinçon (13) descend pour fabriquer la préforme et la refroidir par des moyens non représentés. Le disque (8) tourne autour de son axe (10) et permet ainsi de fabriquer en continu des préformes.

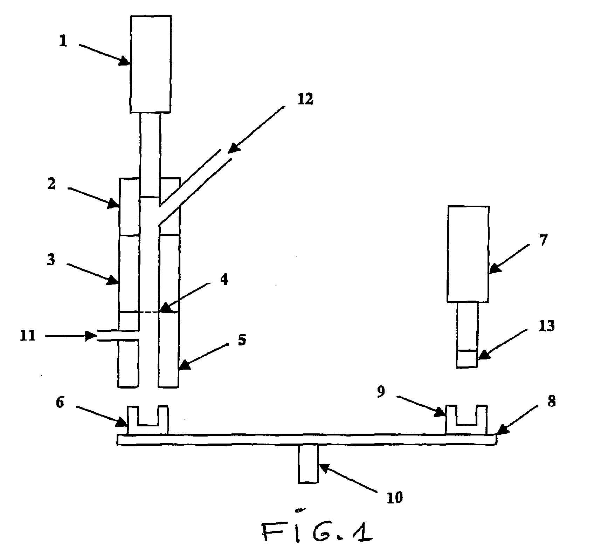

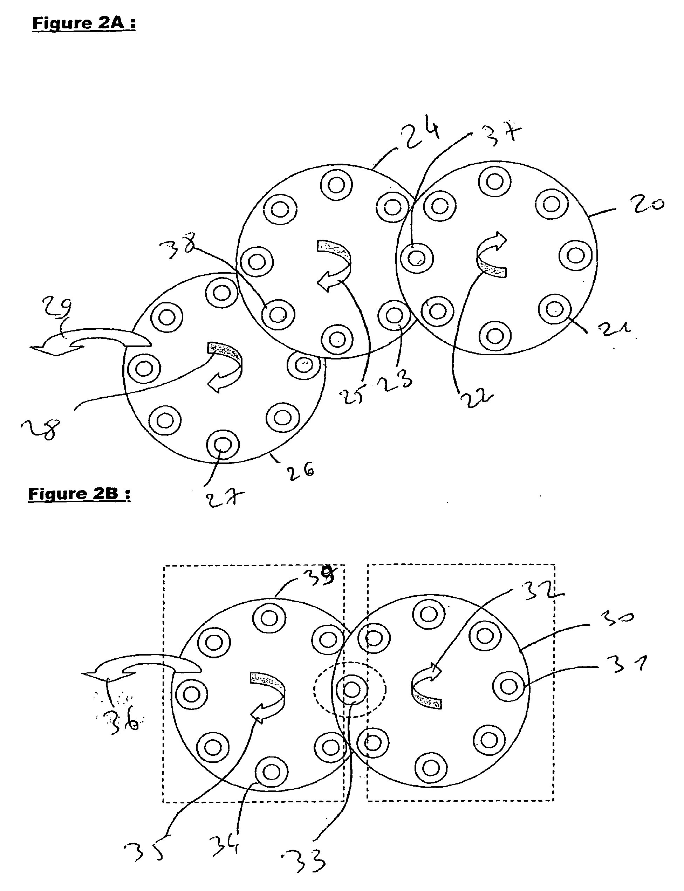

Dans le mode de réalisation du dispositif selon l'invention selon la figure 2A, on dispose d'une roue de plastification par compression (20) qui tourne dans le sens de la flèche (22). Cette roue comporte 8 récipients (21) de récupération de polymère plastifié. Au dessus de ces récipients on dispose 7 têtes de plastification, comme l'une est représentée sur la figure 1, mais non représentées sur la présente figure. La roue de transfert (24), tournant dans le sens de la flèche (25), permet de transférer le polymère plastifié sur la roue de formage par compression (26). Cette dernière tourne dans le sens de la flèche (28).

Le fonctionnement du dispositif est le suivant : chaque tête de plastification fournit par exemple 1 g de PET amorphe dans chaque récipient (21), ce qui fera 7 g par récipient. Il faut bien sûr toujours considérer que les 3 roues (20, 24, 26) sont en mouvement de rotation. Pour le récipient qui se trouve en (37), il est vidé dans un nouveau récipient (23) et la roue de transfert (24) amène ce récipient en position (38). Depuis cette position, le récipient est vidé dans un nouveau récipient (27) et le polymère plastifié est alors matricé par la tête (7,13) de la figure 1. les récipients sont vidés soit par une pompe à engrenage, soit par un piston. Il est prévu sur cette dernière roue 8 têtes de matriçage qui tournent avec cette dernière roue (26). La préforme ainsi obtenue est refroidie rapidement par des moyens non représentés et elle est éjectée en (29).

La figure 2B est une simplification de la figure 2A, on dispose d'une roue de plastification par compression (30) qui tourne dans le sens de la flèche (32). Cette roue comporte 8 récipients (31) de récupération de polymère plastifié. Au dessus de ces récipients on dispose 7 têtes de plastification, comme l'une est représentée sur la figure 1, mais non représentées sur la présente figure. La roue de transfert de la figure 2A est supprimée et en (33) le récipient est vidée dans un récipient (34) et passe donc directement sur la roue de formage par compression (39), tournant dans le sens de la flèche (35).

Le fonctionnement du dispositif est le suivant : chaque tête de plastification fournit par exemple 1 g de PET amorphe dans chaque récipient (31), ce qui fera 7 g par récipient. Il faut bien sûr toujours considérer que les 2 roues (30, 39) sont en mouvement de rotation. Pour le récipient qui se trouve en (33), il est vidé dans un nouveau récipient (34) et le polymère plastifié est alors matricé par la tête (7,13) de la figure 1. Il est prévu sur cette dernière roue 8 têtes de matriçage qui tournent avec cette dernière roue (37). La préforme ainsi obtenue est refroidie rapidement par des moyens non représentés et elle est éjectée en (36).

### Exemple 1

On utilise du PET ayant une viscosité intrinsèque de l'ordre de 0,60 dl/g. On l'améne dans une chambre de plastification régulée à 225 °C. On balaye le polymère avec de l'azote séché et chauffé entre 225 et 240 °C et on dépose dans le récipient 7 g de polymère plastifié. Le disque tourne à 12 tours/min, il comportent 20 récipients et permet de fabriquer 14400 préformes à l'heure. Les préformes ainsi produites sont utilisées pour faire des contenants de 33 cl.

## Revendications

1. Procédé de fabrication d'une préforme à partir d'un polymère amorphe semi-cristallin à l'état amorphe à vitesse de cristallisation lente, dans lequel
- on plastifie ledit polymère par montée rapide en température, à une température inférieure à la température de fusion,
- on presse à travers une filière ledit polymère plastifié,
- on balaye à la sortie de la filière ledit polymère par un gaz neutre, sec et chaud,
- on recueille le polymère plastifié dans un premier récipient, tout en maintenant le polymère à la même température que celle de plastification dans toutes les étapes et
- on effectue un matriçage dans ledit premier récipient ou dans un second récipient, transféré du premier, sous refroidissement brutal de manière à obtenir la préforme dans un état amorphe.

2. Procédé selon la revendication 1, **caractérisé en ce que** le polymère amorphe est choisi dans le groupe constitué par du PET, des polyamides aromatiques, du PEN, et autres.

3. Procédé selon l'une des revenidcations 1 ou 2, **caractérisé en que** la plastification est effectuée à une température du polymère comprise entre sa température de fusion et la température représentant la borne supérieure de zone de cristallisation.

4. Procédé selon la revendication 3, **caractérisé en ce que** le polymère est du PET et la température de plastification est comprise entre 220 et 230 °C.

5. Procédé selon l'une des revendications 1 à 4, **caractérisé en ce** la plastification est effectuée en une durée de l'ordre de la minute.

6. Procédé selon l'une des revendications 1 à 5, **caractérisé en ce qu'**on presse le polymère à travers une filière comportant une multitude d'ouvertures cylindriques identiques en taille et dimension.

7. Procédé selon l'une des revendications 1 à 6, **caractérisé en ce qu'**on presse le polymère plastifié à une pression inférieure à 100 bar.

8. Procédé selon la revendication 7, **caractérisé en ce qu'**on presse à une pression de l'ordre de 50 bar.

9. Procédé selon l'une des revendications 1 à 8, **caractérisé en ce qu'**on balaye à la sortie de la filière avec un gaz choisi parmi l'azote, le gaz carbonique, ...

10. Procédé selon la revendication 9, **caractérisé en ce que** le gaz est de l'azote introduit à une pression relative de l'ordre de 0,2 bar.

11. Procédé selon l'une des revendications 1 à 10, **caractérisé en qu'**on effectue le matriçage dans le premier récipient, en refroidissant ensuite de la température de plastification à une température de l'ordre de 50 °C.

12. Procédé selon l'une des revendications 1 à 10, **caractérisé en ce qu'**on transfère le polymère du premier récipient à un second récipient dans lequel on effectue le matriçage en refroidissant ensuite de la température de plastification à une température de l'ordre de 50 °C.

13. Procédé selon l'une des revendications 11 ou 12, **caractérisé en ce qu'**on effectue le refroidissement en une durée de l'ordre de la minute.

14. Dispositif pour la mise en oeuvre du procédé selon l'une des revendications 1 à 13, **caractérisé en ce qu'**il comprend :
- une chambre de plastification du polymère,
- des moyens de chauffage de ladite chambre, autour de celle-ci,
- des moyens d'alimentation en polymère de ladite chambre,
- une filière sous la chambre de plastification,
- des moyens au dessus de ladite chambre pour pousser le polymère plastifié à travers la filière
- une arrivée de gaz neutre sous la filière,
- un récipient pour recueillir le polymère plastifié,
- un disque tournant comportant une pluralité de récipients et
- un poinçon de matriçage pour former la préforme.
